# EUROPÄISCHE PATENTSCHRIFT

(11) **EP 0 713 643 B1**
(45) Veröffentlichungstag und Bekanntmachung des Hinweises auf die Patenterteilung: **26.11.1997**
(21) Anmeldenummer: 95112425.4
(22) Anmeldetag: 08.08.1995
(51) Int. Cl.: A01K 61/02

(54) **Selbsttätige Fütterungsvorrichtung, insbesondere für Aquarien**
Automatic feeding device, especially for aquariums
Distributeur automatique de nourriture, en particulier pour aquariums

(30) Priorität: 24.11.1994 DE 4441809
(43) Veröffentlichungstag der Anmeldung: 29.05.1996
(60) Teilanmeldung: 97105971.2
(73) Patentinhaber: EHEIM GMBH & CO. KG, D-73779 Deizisau (DE)
(72) Erfinder: Beck, Bernhard, D-73728 Esslingen (DE)
(74) Vertreter: Kratzsch, Volkhard, Dipl.-Ing.

(56) Entgegenhaltungen:
- BE-A- 898 009
- DE-U- 8 529 887
- GB-A- 2 220 919
- GB-A- 2 231 613
- US-A- 3 043 479
- US-A- 4 256 058
- US-A- 5 199 381
- US-A- 5 259 533

## Beschreibung

Die Erfindung bezieht sich auf eine selbsttätige Fütterungsvorrichtung, insbesondere für Aquarien, der im Oberbegriff des Anspruchs 1 definierten Art.

Derartige selbsttätige Fütterungsvorrichtungen werden bei der Anwendung für Aquarien über einem Aquarium plaziert. Dabei besteht die Gefahr, daß die vom Aquarium aufsteigende feuchte Luft durch Öffnungen der Vorratstrommel, die sich im Ausgabebereich befinden, insbesondere durch die Futterausgabeöffnung, in das Innere der Vorratstrommel eindringen kann, wodurch das Futter feucht werden und verklumpen kann. Dies schadet dem Futter und hat den Nachteil, daß dann eine richtige Dosierung nicht mehr möglich ist.

Es ist eine selbsttätige Fütterungsvorrichtung bekannt (DE-U-85 29 887), bei der die genannten Nachteile durch eine Luftkammer mit Düse verhindert werden sollen, die im Gehäuse unterhalb der Vorratstrommel angeordnet ist, wobei an die Luftkammer eine separate Belüftungsvorrichtung anschließbar ist. Die Düse befindet sich in Abstand unterhalb der Futterausgabeöffnung und ist schräg nach oben vor die Futterausgabeöffnung gerichtet. Mittels der äußeren zusätzlichen Belüftungsvorrichtung wird ständig Luft von außen in die Luftkammer und von dort durch die Düse geleitet, aus der die Luft so gegen den die Futterausgabeöffnung enthaltenden Kappenteil und vor die Futterausgabeöffnung geblasen wird, daß aufsteigende feuchte Luft nicht an diese Futterausgabeöffnung gelangen kann. Es wird auf diese Weise ein Luftschleier vor der Futterausgabeöffnung erzeugt, der das Eindringen feuchter Luft in die Vorratstrommel verhindern soll. Von Nachteil ist bei dieser Fütterungsvorrichtung, daß nicht nur das Gehäuse durch die Luftkammer mit Düse und den Anschluß für die zusätzliche Belüftungsvorrichtung aufwendiger und auch voluminöser ist, sondern daß eine besondere Belüftungsvorrichtung als zusätzliches Element notwendig ist, die über eine geeignete Leitung, insbesondere einen Schlauch, an die Luftkammer des Gehäuses angeschlossen werden muß. Diese Leitung ist hinderlich Da der Luftschleier in Abstand unterhalb der Futterausgabeöffnung austritt, besteht dort die Neigung, feuchte Luft aufzunehmen, so daß nicht ausgeschlossen ist, daß doch feuchte Luft in die Futterausgabeöffnung gelangt. Wird, um dies zu vermeiden, der Volumenstrom bzw. der Druck der Luft in der Luftkammer erhöht, führt dies zu unerwünschter Geräuschbildung. Im übrigen kann der ständige Luftschleier in der Fütterungsstellung das Herabfallen des Futters behindern.

Der Erfindung liegt die Aufgabe zugrunde, eine selbsttätige Fütterungsvorrichtung der eingangs genannten Art zu schaffen, bei der das Futter vor Feuchtigkeit zuverlässig geschützt ist bei einfacher, kompakter Bauweise der Fütterungsvorrichtung ohne zusätzliches äußeres und mittels einer Leitung anschließbares Funktionselement.

Die Aufgabe ist bei einer selbsttätigen Fütterungsvorrichtung der eingangs genannten Art gemäß der Erfindung durch die Merkmale des Anspruchs 1
gelöst. Hierdurch werden folgende Vorteile erreicht. In der Ruhestellung (Futtersperrstellung) der Vorratstrommel befindet sich deren Futterausgabeöffnung der Fütterungsstelle abgewandt, in der Regel oben. In dieser Stellung wird die vom Aquarium her aufsteigende feuchte Luft genutzt, um trockene Luft von der der Futterausgabeöffnung fernen mindestens einen Öffnung im Gehäuse her durch das Gehäuse und die Vorratstrommel hindurch anzusaugen. Das Futter kommt dadurch im Ruhezustand der Vorratstrommel nicht mit feuchter Luft in Berührung. Es kann sich dort keine Feuchtigkeit ansammeln. Während der Umdrehung der Vorratstrommel in deren Futterfreigabestellung, in der der Futterauswurf nach unten zum Aquarium möglich ist und die Futterausgabeöffnung sich dann unten befindet, wird das Eindringen feuchter Luft in die Futterausgabeöffnung durch einen Sperrluftstrom verhindert, der aus der Futterausgabeöffnung austritt. Dieser vom Gebläse erzeugte Sperrluftstrom nimmt den gleichen Weg durch das Gehäuse und die Vorratstrommel. Zweckmäßigerweise ist der austretende Sperrluftvolumenstrom dabei so gering gehalten, daß er lediglich Verdrängungswirkung hat aber nicht zum Aufwirbeln des Futters in der Vorratstrommel führt. Als jeweils trockene Luft steht sowohl in der Ruhestellung als auch während der Umdrehung der Vorratstrommel Raumluft fernab des Bereichs, wo sich die Futterausgabeöffnungbefindet, zur Verfügung, wobei bei der Aufstellung der selbsttätigen Fütterungsvorrichtung natürlich darauf zu achten ist, daß die der Futterausgabeöffnung ferne mindestens eine gehäuseseitige Öffnung, durch die Raumluft ansaugbar ist, sich nicht etwa in einem feuchten Luftstrom befindet. Durch die Erfindung wird somit sowohl in der Ruhestellung der Vorratstrommel als auch während deren Umdrehung zuverlässig in der Vorratstrommel befindliches Futter vor Feuchtigkeit geschützt, und dies mit einfachen Mitteln und ohne besondere, extra anzuschließende äußere Belüftungsvorrichtung.

Vorteilhafte Ausgestaltungen sind in den Ansprüchen 2 - 9 enthalten. Den Merkmalen im Anspruch 9 liegen folgende Überlegungen zugrunde. Bei bekannten Fütterungsvorrichtungen ist das Innere der Vorratstrommel mittels eines Deckels an der Stelle verschlossen, wo auch die Abgabe des Futters erfolgt und feuchte Luft vorherrscht. Da dieses Ende vom feuchten Luftstrom beaufschlagt wird, besteht die Gefahr der Kondensation unter anderem an der Trennstelle zwischen dem Deckel und der Vorratstrommel.
Durch Kapillarwirkung des Spaltes zwischen Deckel und Vorratstrommel kann Kondensat in das Innere der Vorratstrommel gelangen und das Futter schädigen. Deswegen ist es vorteilhaft, die Vorratstrommel im Bereich der Futterausgabeöffnung, mit Ausnahme dieser, geschlossen zu halten und die Trennstelle zwischen Vorratstrommel und Deckel fernab davon an das andere Ende der Vorratstrommel zu verlagern, wo keine feuchte Luft herrscht. Bei einer solchen Gestaltung der Vorratstrommel als etwa liegender Becher, dessen offenes Ende fernab dem die Futterausgabeöffnung enthaltenden Ende verläuft, und aufgrund fertigungstechnisch notwendiger Entformungsschrägen bei der Herstellung der Vorratstrommel als Kunststoffteil ergibt sich dann allerdings eine Konizität der Seitenwandungen der Vorratstrommel hin zur Futterausgabeöffnung. Dies bedeutet somit, daß die Seitenwandungen in Richtung zur Futterausgabeöffnung ansteigen. Ein solcher Verlauf wirkt einer Bewegung des Futters in Richtung zur Futterausgabeöffnung entgegen und läßt eine vollständige Entleerung der Vorratstrommel nicht zu. Aufgrund der Merkmale im Anspruch 9 wird unter Beibehaltung der genannten grundsätzlichen Vorteile gleichwohl eine vollständige Entleerung der Vorratstrommel ermöglicht.
Denn aufgrund der Neigung der Drehachse zur Achse der Vorratstrommel wird im Augenblick des Futterauswurfs eine Vorwärtsneigung der Vorratstrommel erzielt. Das Futter wird somit hin zur Futterausgabeöffnung bewegt. In der Ruhestellung hingegen, in der die Futterausgabeöffnung sich oben befindet, nimmt die Vorratstrommel wieder ihre horizontale Ausgangslage ein. Die Vorratstrommel taumelt mithin während einer Umdrehung. Aufgrund dieser Taumelbewegung wird ein Vorwärtstransport des Futters erreicht, wobei dann, wenn die Vorratstrommel die Futterauswurfposition erreicht hat, die unten befindliche Seitenwandung eine Schrägneigung in Richtung zur Futterausgabeöffnung hat. Weitere vorteilhafte Ausgestaltungen sind in den Ansprüchen 10 und 11 enthalten.

Eine weitere vorteilhafte Ausgestaltung enthält Anspruch 12.

Der abnehmbare Deckel ist somit möglichst weit entfernt vom feuchten Luftstrom plaziert. Es ergibt sich somit im Bereich der Beaufschlagung mit feuchter Luft keine Trennfuge bei der Vorratstrommel, so daß sich dort kein das Futter schädigendes Kondensat bilden kann. Die Vorratstrommel mitsamt dem Deckel ist schnell und problemlos ohne besondere Fachkenntnisse, Spezialwerkzeuge oder ähnliches abnehmbar, z.B. zum Nachfüllen des Futters. Die Schnappverbindung zwischen dem Deckel und der Hohlwelle kann z.B. so ausgelegt sein, daß durch Ziehen an der Vorratstrommel die Vorratstrommel mitsamt daran verbleibendem Deckel von der Hohlwelle und somit die Antriebsverbindung gelöst wird. Auf diese Weise kann die Vorratstrommel mitsamt Deckel abgenommen werden, ohne daß die Gefahr besteht, daß enthaltenes Futter herausfällt und die Umgebung verunreinigt. Zum Nachfüllen von Futter wird anschließend ebenfalls durch Ziehen der Deckel von der Vorratstrommel abgezogen unter Überwindung der Schnappverbindung. Somit ist eine einfache Handhabung z.B. zum Füllen der Vorratstrommel mit Futter erreicht und dies auf einfache, kostengünstige und platzsparende Weise. Weitere vorteilhafte Ausgestaltungen enthalten die Ansprüche 13 bis 23.

Es versteht sich, daß wahlweise für jeden Fütterzeitpunkt z.B. auch eine zweifache Drehung der Vorratstrommel erfolgen kann, wenn dies gewünscht ist. Hierbei kann die zweite Umdrehung nach einem festen Zeitintervall verzögert nach der ersten ausgelöst werden. Pro Tag können z.B. bis zu vier frei programmierbare Fütterzeitpunkte zur Verfügung gestellt werden.

Weitere Einzelheiten und Vorteile der Erfindung ergeben sich aus der nachfolgenden Beschreibung.

Die Erfindung ist nachfolgend anhand eines in den Zeichnungen gezeigten Ausführungsbeispieles einer selbsttätigen Fütterungsvorrichtung, insbesondere für Aquarien, näher erläutert. Es zeigen:
- Fig. 1: einen schematischen senkrechten Schnitt mit teilweiser Seitenansicht der Fütterungsvorrichtung,
- Fig. 2 und 3: jeweils eine schematische Seitenansicht der Fütterungsvorrichtung in Fig. 1 in einer Futtersperrstellung mit oben befindlicher Futterausgabeöffnung bzw. in einer Freigabestellung mit unten befindlicher Futterausgabeöffnung,
- Fig. 4: eine Draufsicht der Vorratstrommel bei davon abgezogenem Deckel,
- Fig. 5: einen schematischen Schnitt entlang der Linie V-V in Fig. 4,
- Fig. 6 und 7: jeweils eine schematische stirnseitige Ansicht in Pfeilrichtung VI bzw. VII in Fi. 4,

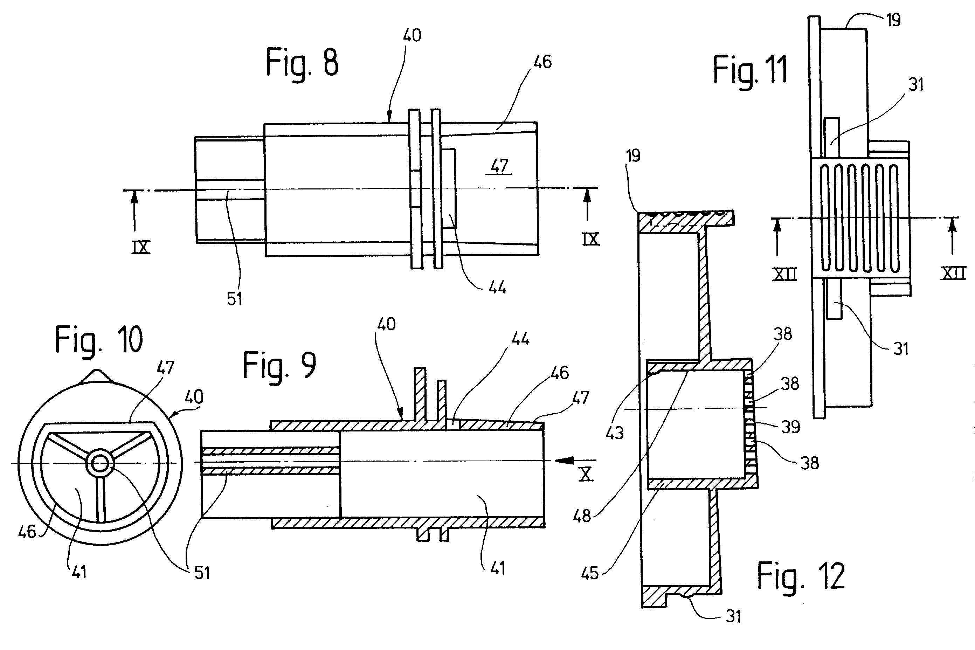

- Fig. 8: eine schematische Draufsicht einer Hohlwelle der Fütterungsvorrichtung,
- Fig. 9: einen schematischen Schnitt entlang der Linie IX-IX in Fig. 8,
- Fig. 10: eine stirnseitige Ansicht in Pfeilrichtung X in Fig. 9,
- Fig. 11: eine schematische Draufsicht allein des Deckels der Vorratstrommel,
- Fig. 12: einen schematischen Schnitt entlang der Linie XII-XII in Fig. 11.

In den Zeichnungen ist eine netzunabhängige, insbesondere batteriebetriebene, automatische Fütterungsvorrichtung insbesondere für Aquarien gezeigt, die der portionsweisen Ausgabe von schüttbarem Futter dient.

Diese Vorrichtung weist ein allgemein mit 10 bezeichnetes Gehäuse mit Füßen 11 auf, mit denen das Gehäuse 10 auf einer Fläche, z.B. im Deckel eines Aquariums, aufstellbar ist.
Das Gehäuse 10 ist z.B. annähernd würfelförmig mit zum Teil gewölbten Seitenwänden. Es besteht z.B. aus Kunststoff.

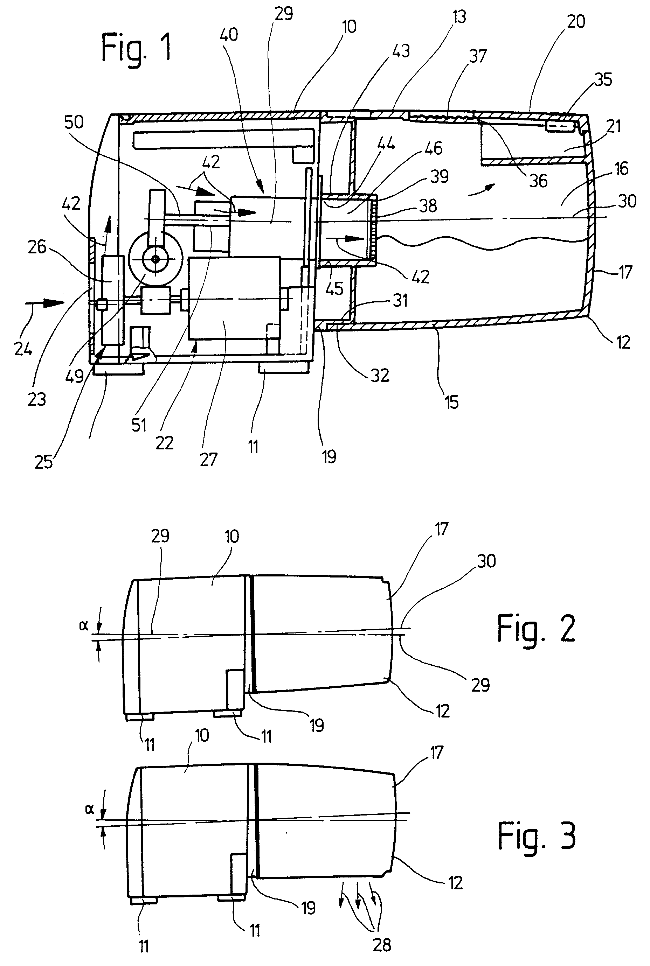

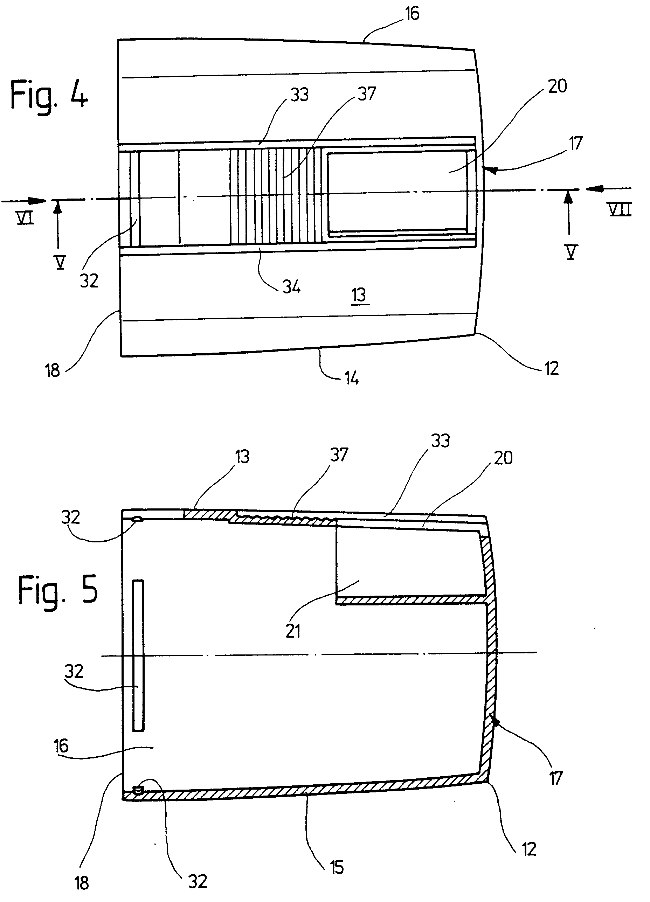

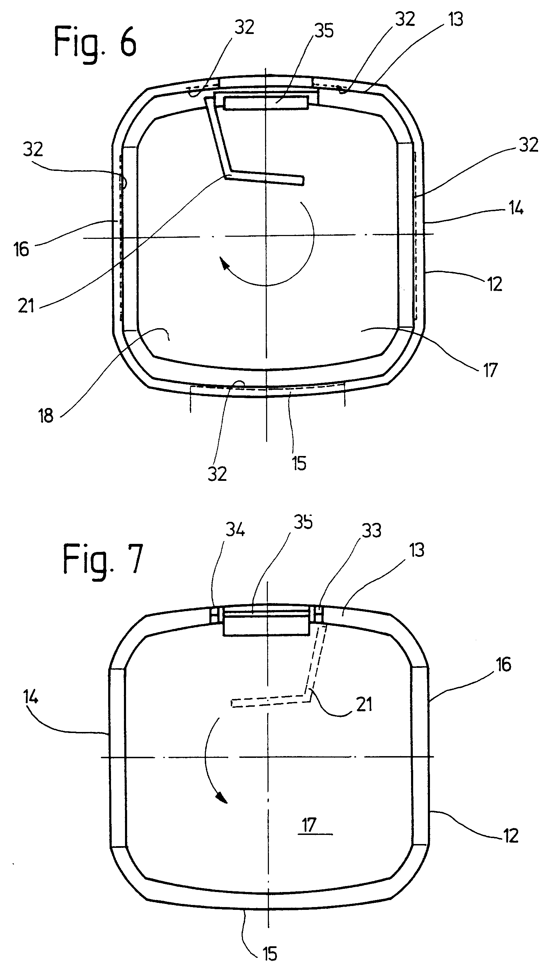

Die Fütterungsvorrichtung weist ferner eine Vorratstrommel 12 z.B. ebenfalls aus Kunststoff auf, die z.B. einen etwa quadratischen Querschnitt (Fig. 6, 7) aufweist mit gerundeten Ecken und zumindest schwach gewölbten Seitenwandungen 13, 14, 15 und 16. Die Vorratstrommel 12 ist als etwa liegender Becher mit geschlossenem Boden 17 und mit geschlossener Seitenwandung 13 - 16 und offener Stirnseite 18 ausgebildet, die mittels eines ablösbaren Deckels 19 verschlossen ist. Der Deckel 19 ist dem Gehäuse 10 zugewandt und in diesem Bereich des Gehäuses gelagert und angetrieben. Auf diese Weise ist die Vorratstrommel 12 am Gehäuse 10 drehbar gehalten. Die Seitenwandungen 14 - 16 der Vorratstrommel 12 sind geschlossen, während die in Fig. 1 und 5 oben befindliche Seitenwandung 13 eine Futterausgabeöffnung 20 enthält, die von einer im Inneren der Vorratstrommel 12 befindlichen, etwa winkelförmigen Schaufel 21 mit Abstand überdeckt ist. Die Futterausgabeöffnung 20 in der Seitenwandung 13 reicht bis zum Boden 17.

Im Gehäuse 10 ist eine Antriebseinrichtung 22 zum Antrieb der Vorratstrommel 12 enthalten. Generell ist über mindestens eine gehäuseseitige Öffnung 23, die fern der Futterausgabeöffnung 20 liegt, in Pfeilrichtung 24 Außenluft einleitbar.

Die Antriebseinrichtung 22 weist ein davon antreibbares Gebläse 25 mit einem Laufrad 26, insbesondere Radiallaufrad, auf, das von einem elektrischen Antriebsmotor 27 der Antriebseinrichtung 22 antreibbar ist.

Die Anordnung ist bei dieser Fütterungsvorrichtung so getroffen, daß Außenluft entsprechend dem Pfeil 24 (Fig. 1) in das Innere des Gehäuses 10 und von dort in das Innere der Vorratstrommel 12 und durch letztere hindurch bis hin zur Futterausgabeöffnung 20 leitbar ist, derart, daß bei Stillstand des Gebläses 25 im Bereich der Vorratstrommel 12, insbesondere der Futterausgabeöffnung 20, von unten her aufsteigende feuchte Luft einen Unterdruck im Bereich der dann oben befindlichen Futterausgabeöffnung 20 erzeugen kann und dadurch Außenluft gemäß Pfeil 24 in das Gehäuse 10, durch die Vorratstrommel 12 und aus der Futterausabeöffnung 20 saugbar ist. Auf diese Weise ist im Ruhezustand der Vorratstrommel 12 ein Schutz des darin enthaltenen Futters vor Feuchtigkeit erreicht. Die im Bereich der Futterausgabeöffnung 20 aufsteigende feuchte Luft saugt in diesem Ruhezustand trockene Umgebungsluft in Pfeilrichtung 24 durch das Gehäuse 10 in das Innere der Vorratstrommel 12, so daß sich dort keine Feuchtigkeit ansammeln kann. Die Anordnung ist ferner so getroffen, daß bei betätigtem Gebläse 25 mittels eines vom Gebläse 25 erzeugten inneren Oberdruckes Außenluft in Pfeilrichtung 24 in gleicher Richtung durch die Vorratstrommel 12 und als Sperrluftstrom, der in Fig. 3 durch Pfeile 28 angedeutet ist, aus der Futterausgabeöffnung 20 blasbar ist. Durch diesen Sperrluftstrom (Pfeile 28), der aus der Futterausgabeöffnung 20 austritt, wird bei eingeschaltetem Gebläse 25 das Eindringen von feuchter Luft in die in diesem Zustand unten befindliche Futterausgabeöffnung 20 verhindert. Der vom Gebläse 25 erzeugte Überdruck setzt sich vom Inneren des Gehäuses 10 durch die Vorratstrommel 12 bis hin zur Futterausabeöffnung 20 fort. Der austretende Sperrluftvolumenstrom ist dabei zweckmäßigerweise so gering gehalten, daß er nur Verdrängungswirkung hat.

Bei Stillstand des Gebläses 25 steht die Vorratstrommel 12 still, wobei bei diesem Stillstand die Futterausgabeöffnung 20 der unten befindlichen Fütterungsstelle abgewandt ist, insbesondere oben liegt (Fig. 1). Während des betätigten Gebläses 25 ist die Vorratstrommel 12 mittels der Antriebseinrichtung 22 mit ihrer Futterausgabeöffnung 20 zwischen der Futtersperrstellung (Futterausgabeöffnung liegt oben) und der Futterfreigabestellung (Futterausgabeöffnung liegt unten) drehbetätigbar. Dabei wird die Vorratstrommel 12 intervallweise zwischen der Futtersperrstellung und der Futterfreigabestellung gedreht, wobei das Gebläse 25 gemeinsam mit der Vorratstrommel 12 mittels der Antriebseinrichtung 22 betätigbar ist.

Die mindestens eine gehäuseseitige Öffnung 23, über die Außenluft gemäß Pfeil 24 einleitbar ist, befindet sich fern der Futterausgabeöffnung 20, und zwar am gegenüberliegenden Ende. Somit befindet sich diese mindestens eine Öffnung 23 im Bereich trockener Umgebungsluft. Diese Öffnung 23 ist dabei im Bereich des Gebläses 25, insbesondere des Laufrades 26, angeordnet, so daß möglichst wenig Verluste entstehen.

Eine weitere wesentliche Besonderheit der selbsttätigen Fütterungsvorrichtung liegt darin, daß die Drehachse 29 zum Antrieb der Vorratstrommel 12 in bezug auf die Achse 30 der Vorratstrommel 12 zumindest geringfügig (Winkel α) geneigt verläuft. Der Neigungswinkel α der Drehachse 29 kann z.B. etwa 2° betragen. Die Vorratstrommel 12 ist, ausgehend von einem horizontalen Verlauf (Fig. 2) in der stillstehenden Futtersperrstellung, bei der sich die Futterausgabeöffnung 20 oben befindet, bei Drehbetätigung z.B. um etwa 180° in die Futterfreigabestellung (Fig. 3) in Form einer Taumelbewegung dergestalt drehbetätigbar, daß eine das Futter in Fig. 2, 3 von links nach rechts in Richtung zur Futterausgabeöffnung 20 bewegende Vorwärtsneigung erzielbar ist. Aufgrund der Neigung der Drehachse 29 zur Achse 30 der Vorratstrommel 12 wird also im Augenblick des Futterauswurfs eine Vorwärtsneigung der Vorratstrommel 12 erzielt, wodurch das Futter zur Futterausgabeöffnung 20 hin bewegt wird. In der demgegenüber um 180° gedrehten Ruhestellung hingegen (Fig. 2) befindet sich die Vorratstrommel 12 wieder in der horizontalen Ausgangslage. Die Vorratstrommel 12 vollführt also ausgehend von der Futtersperrstellung (Fig. 2) bei der Drehbewegung in die Futterfreigabestellung (Fig. 3) eine Taumelbewegung. Dadurch ist in einfacher Weise eine leichte Konizität der Seitenwandungen 13 - 16 in Fig. 1 von links nach rechts kompensiert, die sich z.B. aufgrund notwendiger fertigungstechnischer Entformungsschrägen ergibt.

Ersichtlich ist die Vorratstrommel 12 am dem Gehäuse 10 abgewandten Ende und dort, wo die Futterausgabeöffnung 20 liegt, vollständig geschlossen, wobei auch keine etwaige Trennstelle zwischen der Vorratstrommel und einem dortigen Deckel vorhanden ist, weil die Vorratstrommel 12 auch im Bereich des Bodens 17 als einstückiges Gebilde völlig geschlossen ist, mit Ausnahme der Futterausgabeöffnung 20. Somit kann in diesem Bereich bei einer Beaufschlagung mit feuchter Luft kein etwaiges Kondensat entstehen, das z.B. durch Kapillarwirkung eines sonst vorhandenen Spaltes zwischen der Vorratstrommel 12 und einem dortigen Deckel in das Innere der Vorratstrommel 12 gelangen und dort das Futter schädigen könnte.

Statt dessen ist die Trennstelle zwischen dem Deckel 19 und der Vorratstrommel 12 in Fig. 1 nach links und fernab der Futterausgabeöffnung 20 verlegt. Der Deckel 19 ist mittels einer Schnappverbindung mit der Vorratstrommel 12 verbunden. Diese Schnappverbindung weist an einem Teil, z.B. an Randzonen der vier Ränder des Deckels 19, jeweils zumindest einen Vorsprung 31, insbesondere jeweils eine quer verlaufende Rippe, und am anderen Teil, z.B. an zugeordneten Randzonen der offenen Stirnseite 18 der Vorratstrommel 12, zumindest jeweils eine zugeordnete Aufnahme 32, insbesondere jeweils eine quer verlaufende Nut, einen Schlitz od.dgl. auf, in die der zugeordnete jeweilige Vorsprung 31 formschlüssig einschnappen kann. Dadurch ist es ermöglicht, die Vorratstrommel 12 mit daran formschlüssig gehaltenem Deckel 19 z.B. zum Zwecke des Nachfüllens von Futter vom Gehäuse 10 als geschlossene Einheit abnehmen zu können. Die so abgenommene Vorratstrommel 12 mit Deckel 19 kann dann z.B. fern vom Aquarium neu gefüllt werden, indem der Deckel 19 von der Vorratstrommel 12 abgezogen wird und somit die Stirnseite 18 der Vorratstrommel 12 zum Einfüllen des Futters freigegeben wird.

Die obere Seitenwandung 13 der Vorratstrommel 12 enthält zwischen zwei Tropfleisten 33 und 34 einen Schieber 35, der zum völligen Verschluß der Futterausgabeöffnung 20 in Fig. 1 ganz nach rechts bis hin an den Boden 17 verschoben werden kann. Der Schieber 35 weist am in Fig. 1 linken Endbereich einen nach unten überstehenden Vorsprung 36 auf, der in Vertiefungen einer Riffelung 37 auf der Oberseite der Seitenwandung 13 in jeder Schiebestellung formschlüssig eingreift. Auf diese Weise ist die jeweilige Schiebestellung des Schiebers 35 formschlüssig gesichert.

Ist bei mittels des Schiebers 35 verschlossener Futterausgabeöffnung 20 und abgezogenem Deckel 19 die Vorratstrommel 12 mit neuem Futter gefüllt worden, so wird der Deckel 19 auf die in Fig. 4 und 5 links offene Stirnseite 18 aufgesetzt und in die Vorratstrommel 12 eingeschnappt, wobei der jeweilige Vorsprung 31 formschlüssig in die zugeordnete jeweilige Aufnahme 32 einschnappt. Die komplette Einheit aus Vorratstrommel 12 und Deckel 19 kann sodann wieder am Gehäuse 10 angebracht werden. In beschriebener Weise gestaltet sich das Abnehmen der Vorratstrommel 12 und das Befüllen dieser mit neuem Futter einfach und auch insoweit vorteilhaft, als dabei nicht die Gefahr besteht, daß in der Vorratstrommel 12 befindliches restliches Futter herausfallen und das Aquarium oder die übrige Umgebung verunreinigen kann.

Der Deckel 19 weist Öffnungen 38 für den Luftdurchlaß zum Inneren der Vorratstrommel 12 hin auf. Die Öffnungen 38 sind im zentralen Bereich des Deckels 19 vorgesehen und z.B. als Wanddurchbrüche in der Deckelwand 39 ausgebildet.

Die Vorratstrommel 12 ist mitsamt dem Deckel 19 auf einer Hohlwelle 40 des Gehäuses 10 gehalten, wobei die Hohlwelle 40 mindestens einen axial durchgängigen Kanal 41 für den Luftdurchlaß aufweist. Auf diese Weise kann somit die Außenluft gemäß Pfeil 24 durch die Öffnung 23 in das Innere des Gehäuses 10 und dort durch den Kanal 41 der Hohlwelle 40 hindurch zum Deckel 19 und durch die Öffnungen 38 in der Deckelwand 39 in das Innere der Vorratstrommel 12 gelangen. Dies ist in Fig. 1 mit Pfeilen 42 verdeutlicht.

Der Deckel 19 ist mittels einer lösbaren Schnappverbindung mit der Hohlwelle 40 verbunden. Diese Schnappverbindung weist an einem Teil, z.B. dem Deckel 19, mindestens einen Vorsprung 43, insbesondere eine querverlaufende Rippe, und am anderen Teil , z.B. der Hohlwelle 40, mindestens eine zugeordnete Aufnahme 44, insbesondere eine querverlaufende Nut, einen entsprechenden Schlitz od.dgl. auf.

Der Deckel 19 weist im zentralen Bereich eine Hülse 45 auf, mit der der Deckel 19 auf ein Ende 46 der Hohlwelle 40 aufschiebbar ist. Am Ende der Hohlwelle 40 einerseits und der Hülse 45 andererseits ist jeweils eine flache Mitnahmefläche 47 bzw. 48 vorgesehen, die bei aufgeschobenem Deckel 19 zusammen der Drehmitnahme dienen.

Die Antriebseinrichtung 22 treibt über den intervallweise einschaltbaren elektrischen Antriebsmotor 27 ein nachgeschaltetes Getriebe 49, insbesondere ein zweistufiges Schneckengetriebe, an, dessen Abtrieb über eine Welle 50 erfolgt, die drehfest mit der Hohlwelle 40 verbunden ist, z.B. in eine Hülse 51 der Hohlwelle 40 eingepreßt ist.

## Patentansprüche

1. Selbsttätige Fütterungsvorrichtung, insbesondere für Aquarien, die eine an einem Gehäuse (10) drehbar gehaltene Vorratstrommel (12) mit Futterausgabeöffnung (20) und eine Antriebseinrichtung (22) im Gehäuse (10) für die Vorratstrommel (12) aufweist, wobei über mindestens eine gehäuseseitige Öffnung (23), die fern der Futterausgabeöffnung (20) liegt, Außenluft einleitbar ist,
**dadurch gekennzeichnet**,
daß die Antriebseinrichtung (22) ein davon antreibbares Gebläse (25) aufweist und daß die Außenluft in das Innere des Gehäuses (10) und von dort in die Vorratstrommel (12) und durch diese hindurch bis zur Futterausgabeöffnung (20) leitbar ist derart, daß bei Stillstand des Gebläses (25) im Bereich der Vorratstrommel (12), insbesondere der Futterausgabeöffnung (20), aufsteigende feuchte Luft einen Unterdruck im Bereich der Futterausgabeöffnung (20) erzeugen kann und dadurch Außenluft in das Gehäuse (10), durch die Vorratstrommel (12) und aus der Futterausgabeöffnung (20) saugbar ist und daß bei betätigtem Gebläse (25) mittels eines vom Gebläse (25) erzeugten inneren Überdrucks Außenluft in gleicher Richtung durch die Vorratstrommel (12) und als Sperrluftstrom (Pfeile 28) aus der Futterausgabeöffnung (20) blasbar ist.

2. Selbsttätige Fütterungsvorrichtung nach Anspruch 1,
**dadurch gekennzeichnet**,
daß bei Stillstand des Gebläses (25) die Vorratstrommel (12) stillsteht.

3. Selbsttätige Fütterungsvorrichtung nach Anspruch 2,
**dadurch gekennzeichnet**,
daß bei Stillstand des Gebläses (25) und der Vorratstrommel (12) die Futterausgabeöffnung (20) der unten befindlichen Fütterungsstelle abgewandt ist, insbesondere oben liegt.

4. Selbsttätige Fütterungsvorrichtung nach einem der Ansprüche 1 bis 3,
**dadurch gekennzeichnet**,
daß während des betätigten Gebläses (25) die Vorratstrommel (12) mittels der Antriebseinrichtung (22) mit ihrer Futterausgabeöffnung (20) zwischen einer Futtersperrstellung und einer Futterfreigabestellung drehbetätigbar ist.

5. Selbsttätige Fütterungsvorrichtung nach einem der Ansprüche 1 bis 4,
**dadurch gekennzeichnet**,
daß die Vorratstrommel (12) intervallweise zwischen einer Futtersperrstellung, in der sich die Futterausgabeöffnung (20) oben befindet, und einer Futterfreigabestellung, in der sich die Futterausgabeöffnung (20) unten, der Fütterungsstelle zugewandt, befindet, drehbetätigbar ist.

6. Selbsttätige Fütterungsvorrichtung nach einem der Ansprüche 1 bis 5,
**dadurch gekennzeichnet**,
daß das Gebläse (25) gemeinsam mit der Vorratstrommel (12) mittels der Antriebseinrichtung (22) betätigbar ist.

7. Selbsttätige Fütterungsvorrichtung nach einem der Ansprüche 1 bis 6,
**dadurch gekennzeichnet**,
daß das Gebläse (25) ein Laufrad (26), insbesondere ein Radiallaufrad, aufweist, das von einem elektrischen Antriebsmotor (27) der Antriebseinrichtung (22) antreibbar ist.

8. Selbsttätige Fütterungsvorrichtung nach einem der Ansprüche 1 bis 7,
**dadurch gekennzeichnet**,
daß die mindestens eine gehäuseseitige und fern der Futterausgabeöffnung (20) befindliche Öffnung (23) im Bereich des Gebläses (25), insbesondere des Laufrades (26) des Gebläses (25), angeordnet ist.

9. Selbsttätige Fütterungsvorrichtung nach einem oder mehreren der vorangehenden Ansprüche,
**dadurch gekennzeichnet**,
daß die Drehachse (29) zum Antrieb der Vorratstrommel (12) in bezug auf die Achse (30) der Vorratstrommel (12) zumindest geringfügig geneigt (Winkel α) verläuft.

10. Selbsttätige Fütterungsvorrichtung nach Anspruch 9,
**dadurch gekennzeichnet**,
daß der Neigungswinkel α der Drehachse (29) etwa 2° beträgt.

11. Selbsttätige Fütterungsvorrichtung nach Anspruch 9 oder 10,
**dadurch gekennzeichnet**,
daß die Vorratstrommel (12) ausgehend von einem horizontalen Verlauf in der stillstehenden Futtersperrstellung (Fig. 2) bei deren Drehbetätigung z.B. um etwa 180° Umfangswinkel in die Futterfreigabestellung (Fig. 3) eine Taumelbewegung dergestalt vollführt, daß eine das Futter zur Futterausgabeöffnung (20) bewegende Vorwärtsneigung erzielbar ist.

12. Selbsttätige Fütterungsvorrichtung nach einem oder mehreren der vorangehenden Ansprüche,
**dadurch gekennzeichnet**,
daß die Vorratstrommel (12) als etwa liegender Becher mit geschlossenem Boden (17) und mit bis auf die in der Seitenwandung (13) nahe des Bodens (17) befindliche Futterausgabeöffnung (20) geschlossener Seitenwandung (14 - 16) ausgebildet ist und an der bei einem Becher offenen Stirnseite (18) mittels eines ablösbaren Deckels (19) verschlossen ist und daß die Vorratstrommel (12) mit dem Deckel (19) dem Gehäuse (10) zugewandt und in diesem Bereich gelagert und angetrieben ist.

13. Selbsttätige Fütterungsvorrichtung nach einem der Ansprüche 1 bis 12,
**dadurch gekennzeichnet**,
daß der Deckel (19) Öffnungen (38) zum Luftdurchlaß zum Inneren der Vorratstrommel (12) hin aufweist.

14. Selbstätige Fütterungsvorrichtung nach Anspruch 13,
**dadurch gekennzeichnet**,
daß die Öffnungen (38) im zentralen Bereich des Deckels (19) vorgesehen sind.

15. Selbsttätige Fütterungsvorrichtung nach Anspruch 13 oder 14,
**dadurch gekennzeichnet**,
daß die Öffnungen (38) als Wanddurchbrüche in der Deckelwand (39) ausgebildet sind.

16. Selbsttätige Fütterungsvorrichtung nach einem der Ansprüche 1 bis 15,
**dadurch gekennzeichnet**,
daß die Vorratstrommel (12) auf einer Hohlwelle (40) des Gehäuses (10) gehalten ist, die mindestens einen axial durchgängigen Kanal (41) für den Luftdurchlaß aufweist.

17. Selbsttätige Fütterungsvorrichtung nach einem der Ansprüche 1 bis 16,
**dadurch gekennzeichnet**,
daß der Deckel (19) mittels einer lösbaren Schnappverbindung (43,44) mit der Hohlwelle (40) verbunden ist.

18. Selbsttätige Fütterungsvorrichtung nach Anspruch 17,
**dadurch gekennzeichnet**,
daß die Schnappverbindung am einen Teil, z.B. dem Deckel (19), mindestens einen Vorsprung (43), insbesondere eine querverlaufende Rippe, und am anderen Teil, z.B. der Hohlwelle (40), mindestens eine zugeordnete Aufnahme (44), insbesondere eine querverlaufende Nut, einen entsprechenden Schlitz od.dgl., aufweist.

19. Selbstätige Fütterungsvorrichtung nach einem der Ansprüche 1 bis 18,
**dadurch gekennzeichnet**,
daß der Deckel (19) im zentralen Bereich eine Hülse (45) aufweist, mit der der Deckel (19) auf ein Ende (46) der Hohlwelle (40) aufschiebbar ist.

20. Selbsttätige Fütterungsvorrichtung nach Anspruch 19,
**dadurch gekennzeichnet**,
daß am Ende der Hohlwelle (40) einerseits und der Hülse (45) andererseits jeweils eine flache Mitnahmefläche (47,48) vorgesehen ist, die bei aufgeschobenem Deckel (19) gemeinsam der Drehmitnahme dienen.

21. Selbsttätige Fütterungsvorrichtung nach einem der Ansprüche 1 bis 20,
**dadurch gekennzeichnet**,
daß die Vorratstrommel (12) mittels einer Schnappverbindung (31,32) mit dem Deckel (19) verbunden ist.

22. Selbsttätige Fütterungsvorrichtung nach Anspruch 21,
**dadurch gekennzeichnet**,
daß die Schnappverbindung am einen Teil, z.B. an Randzonen des Deckels (19), zumindest jeweils einen Vorsprung (31), insbesondere jeweils eine querverlaufende Rippe, und am anderen Teil, z.B. an Randzonen der Vorratstrommel (12), zumindest jeweils eine zugeordnete Aufnahme (32), insbesondere eine querverlaufende Nut, einen Schlitz od.dgl., aufweist.

23. Selbsttätige Fütterungsvorrichtung nach einem der Ansprüche 1 bis 22,
**dadurch gekennzeichnet**,
daß die Antriebseinrichtung (22) einen intervallweise einschaltbaren elektrischen Antriebsmotor (27) mit nachgeschaltetem Getriebe (49), insbesondere zweistufigem Schneckengetriebe, aufweist, dessen Abtrieb über eine Welle (50) geschieht, die drehfest mit der Hohlwelle (40) verbunden ist, insbesondere in dieser aufgenommen ist.

## Claims

1. Automatic feeding device, especially for aquariums, which has a storage drum (12) rotatably held on a housing (10) having a feed dispenser outlet (20), and a drive means (22) in the housing (10) for the storage drum (12), whereby outside air may be directed in via at least one opening (23) on the housing side lying remote from the feed dispenser outlet (20), characterised in that the drive means (22) has a blower (25) driven by it; and that the outside air may be directed into the interior of the housing (10) and from there into the storage drum (12) and through this as far as the feed dispenser outlet (20); that upon stoppage of the blower (25), moist air rising in the region of the storage drum (12), in particular of the feed dispenser outlet (20), is able to generate a partial vacuum in the region of the feed dispenser outlet (20), and as a result outside air can be drawn into the housing (10), through the storage drum (12) and out of the feed dispenser outlet (20); and that upon operation of the blower (25), outside air may be blown by means of an internal excess pressure generated by the blower (25) in the same direction through the storage drum (12) and out of the feed dispenser outlet (20) as a sealing air flow (arrows 28).

2. Automatic feeding device according to Claim 1, characterised in that when the blower (25) is stopped, the storage drum (12) stands still.

3. Automatic feeding device according to Claim 2, characterised in that when the blower (25) and the storage drum (12) stand still, the feed dispenser outlet (20) faces away from the feeding point located at the bottom, in particular is located at the top.

4. Automatic feeding device according to one of Claims 1 to 3, characterised in that while the blower (25) is in operation, the storage drum (12) is rotated by means of the drive means (22) with its feed dispenser outlet (20) between a feed lock position and a feed release position.

5. Automatic feeding device according to one of Claims 1 to 4, characterised in that the storage drum (12) may be rotated at intervals between a feed lock position, in which the feed dispenser outlet (20) is located at the top, and a feed release position, in which the feed dispenser outlet (20) is located at the bottom, facing the feeding point.

6. Automatic feeding device according to one of Claims 1 to 5, characterised in that the blower (25) may be operated together with the storage drum (12) by means of the drive means (22).

7. Automatic feeding device according to one of Claims 1 to 6, characterised in that the blower (25) has an impeller (26), in particular a radial impeller, which may be driven by an electric drive motor (27) of the drive means (22).

8. Automatic feeding device according to one of Claims 1 to 7, characterised in that the at least one opening (23) located on the housing side and remote from the feed dispenser outlet (20) is arranged in the region of the blower (25), in particular of the impeller (26) of the blower (25).

9. Automatic feeding device according to one or more of the preceding claims, characterised in that the rotational axis (29) for driving the storage drum (12) runs at least on a slight inclination (angle α) relative to the axis (30) of the storage drum (12).

10. Automatic feeding device according to Claim 9, characterised in that the angle of inclination α of the rotational axis (29) amounts to about 2°.

11. Automatic feeding device according to Claim 9 or 10, characterised in that, starting from a horizontal course in the stationary feed lock position (Figure 2), the storage drum (12) performs a tumbling motion during its rotation, for example, around a circumferential angle of approximately 180° into the feed release position (Figure 3), in such a way that a forward inclination may be made to move the feed towards the feed dispenser outlet (20).

12. Automatic feeding device according to one or more of the preceding claims, characterised in that the storage drum (12) is constructed as an approximately horizontal beaker with a closed base (17) and with side walls (14-16), which are closed except for the feed dispenser outlet (20) located in the side wall (13) close to the base (17), and is sealed by means of a detachable cover (19) on the face side (18) open in the case of a beaker; and that the storage drum (12) faces the housing (10) with the cover (19) and is mounted and driven in this region.

13. Automatic feeding device according to one of Claims 1 to 12, characterised in that the cover (19) has openings (38) for the passage of air towards the interior of the storage drum (12).

14. Automatic feeding device according to Claim 13, characterised in that the openings (38) are provided in the central region of the cover (19).

15. Automatic feeding device according to Claim 13 or 14, characterised in that the openings (38) are constructed as wall passages in the cover wall (39).

16. Automatic feeding device according to one of Claims 1 to 15, characterised in that the storage drum (12) is held on a hollow shaft (40) of the housing (10), which has at least one axially continuous channel (41) for the passage of air.

17. Automatic feeding device according to one of Claims 1 to 16, characterised in that the cover (19) is connected to the hollow shaft (40) by means of a detachable snap fastening (43, 44).

18. Automatic feeding device according to Claim 17, characterised in that on one portion, e.g. the cover (19), the snap fastening has at least one projection (43), in particular a transverse rib, and on the other portion, e.g. the hollow shaft (40), at least one associated cavity (44), in particular a transverse groove, a corresponding slot or similar.

19. Automatic feeding device according to one of Claims 1 to 18, characterised in that in its central region, the cover (19) has a sleeve (45), with which the cover (19) may be pushed onto an end (46) of the hollow shaft (40).

20. Automatic feeding device according to Claim 19, characterised in that at the end of the hollow shaft (40) on the one hand and of the sleeve (45) on the other, a flat pulling face (47, 48) is respectively provided, these serving to jointly rotate when the cover (19) is pushed in place.

21. Automatic feeding device according to one of Claims 1 to 20, characterised in that the storage drum (12) is connected to the cover (19) by means of a snap fastening (31, 32).

22. Automatic feeding device according to Claim 21, characterised in that on one portion, e.g. on edge zones of the cover (19), the snap fastening has at least one respective projection (31), in particular a respective transverse rib, and on the other portion, e.g. on edge zones of the storage drum (12), at least one associated cavity (32), in particular a transverse groove, a corresponding slot or similar.

23. Automatic feeding device according to one of Claims 1 to 22, characterised in that the drive means (22) has an electric drive motor (27), which may be switched on at intervals, with a secondary transmission (49), in particular a two-stage worm gear, the output of which occurs via a shaft (50) connected against rotation to the hollow shaft (40), and in particular housed therein.

## Revendications

1. Distributeur automatique de nourriture, en particulier pour aquariums, qui comprend un tambour d'alimentation (12) monté à rotation dans un boîtier (10) avec une ouverture de délivrance de nourriture (20) et un dispositif d'entraînement (22) dans le boîtier (10) pour le tambour d'alimentation (12), de l'air extérieur pouvant être introduit via au moins une ouverture (23) côté boîtier, qui est située à distance de l'ouverture de délivrance de nourriture (20), caractérisé en ce que le dispositif d'entraînement (22) présente une soufflerie (25) susceptible d'être entraînée par celui-ci et en ce que l'air extérieur peut être acheminé à l'intérieur du boîtier (10) et, de là, dans le tambour d'alimentation (12) et, à travers celui-ci, jusqu'à l'ouverture de délivrance de nourriture (20) de sorte que, lorsque la soufflerie (25) est à l'arrêt, l'augmentation de l'air humide puisse produire dans la zone du tambour d'alimentation (12), en particulier de l'ouverture de délivrance de nourriture (20), une dépression dans la zone de l'ouverture de délivrance de nourriture (20) et que, de ce fait, de l'air extérieur puisse être aspiré dans le boîtier (10), à travers le tambour d'alimentation (12) et hors de l'ouverture de délivrance de nourriture (20) et que, lorsque la soufflerie (25) est en marche, du fait de la surpression interne produite par la soufflerie (25), de l'air extérieur puisse être soufflé dans la même direction à travers le tambour d'alimentation (12) et sous forme de courant d'air de blocage (flèche 28) hors de l'ouverture de délivrance de nourriture (20).

2. Distributeur automatique de nourriture selon la revendication 1, caractérisé en ce que, à l'arrêt de la soufflerie (25), le tambour d'alimentation (12) est à l'arrêt.

3. Distributeur automatique de nourriture selon la revendication 2, caractérisé en ce que, lorsque la soufflerie (25) et le tambour d'alimentation (12) sont à l'arrêt, l'ouverture de délivrance de nourriture (20) est écartée de la position d'alimentation inférieure, en particulier se trouve tournée vers le haut.

4. Distributeur automatique de nourriture selon l'une quelconque des revendications 1 à 3, caractérisé en ce que, lorsque la soufflerie (25) est en marche, le tambour d'alimentation (12) peut être commandé en rotation au moyen du dispositif d'entraînement (22) pour faire passer son ouverture de délivrance de nourriture (20) entre une position de blocage de nourriture et une position de délivrance de nourriture.

5. Distributeur automatique de nourriture selon l'une quelconque des revendications 1 à 4, caractérisé en ce que le tambour d'alimentation (12) peut être commandé en rotation par intervalles entre une position de blocage de nourriture, dans laquelle l'ouverture de délivrance de nourriture (20) est tournée vers le haut, et une position de délivrance de nourriture, dans laquelle l'ouverture de délivrance de nourriture (20) est tournée vers le bas, vers la position d'alimentation.

6. Distributeur automatique de nourriture selon l'une quelconque des revendications 1 à 5, caractérisé en ce que la soufflerie (25) peut être commandée conjointement avec le tambour d'alimentation (12) au moyen du dispositif d'entraînement (22).

7. Distributeur automatique de nourriture selon l'une quelconque des revendications 1 à 6, caractérisé en ce que la soufflerie (25) présente un rotor (26), en particulier un rotor radial, qui peut être entraîné par un moteur d'entraînement électrique (27) du dispositif d'entraînement (22).

8. Distributeur automatique de nourriture selon l'une quelconque des revendications 1 à 7, caractérisé en ce qu'au moins une ouverture (23) située côté boîtier et à distance de l'ouverture de délivrance de nourriture (20) est agencée dans la zone de la soufflerie (25), en particulier du rotor (26) de la soufflerie (25).

9. Distributeur automatique de nourriture selon une ou plusieurs des revendications précédentes, caractérisé en ce que l'axe de rotation (29) pour l'entraînement du tambour d'alimentation (12) est au moins faiblement incliné (angle α) par rapport à l'axe (30) du tambour d'alimentation (12).

10. Distributeur automatique de nourriture selon la revendication 9, caractérisé en ce que l'angle d'inclinaison α de l'axe de rotation (29) est d'environ 2°.

11. Distributeur automatique de nourriture selon la revendication 9 ou 10, caractérisé en ce que le tambour d'alimentation (12) effectue un déplacement oscillant en partant d'un parcours horizontal dans la position de blocage de nourriture à l'arrêt (Fig. 2) lors de sa commande en rotation, par exemple d'un angle périphérique d'environ 180° dans la position de délivrance de nourriture (Fig. 3) de manière à pouvoir assurer une inclinaison vers l'avant pour déplacer la nourriture vers l'ouverture de délivrance de nourriture (20).

12. Distributeur automatique de nourriture selon une ou plusieurs des revendications précédentes, caractérisé en ce que le tambour d'alimentation (12) est conformé en bécher plus ou moins horizontal avec un fond fermé (17) et une paroi latérale (14-16) fermée à l'exclusion de l'ouverture de délivrance de nourriture (20) qui se trouve dans la paroi latérale (13) à proximité du fond (17), et est fermé sur le côté frontal (18) ouvert dans un bécher au moyen d'un couvercle retirable (19), et en ce que le tambour d'alimentation (12) avec le couvercle (19) est tourné vers le boîtier (10) et est monté et entraîné dans cette zone.

13. Distributeur automatique de nourriture selon l'une quelconque des revendications 1 à 12, caractérisé en ce que le couvercle (19) présente des ouvertures (38) pour le passage de l'air vers l'intérieur du tambour d'alimentation (12).

14. Distributeur automatique de nourriture selon la revendication 13, caractérisé en ce que les ouvertures (38) sont ménagées dans la zone centrale du couvercle (19).

15. Distributeur automatique de nourriture selon la revendication 13 ou 14, caractérisé en ce que les ouvertures (38) se présentent sous la forme de perforations dans la paroi (39) du couvercle.

16. Distributeur automatique de nourriture selon l'une quelconque des revendications 1 à 15, caractérisé en ce que le tambour d'alimentation (12) est maintenu sur un arbre creux (40) du boîtier (10), qui présente au moins un canal axial (41) pour le passage de l'air.

17. Distributeur automatique de nourriture selon l'une quelconque des revendications 1 à 16, caractérisé en ce que le couvercle (19) est relié à l'arbre creux (40) au moyen d'une liaison à déclic (43, 44) enlevable.

18. Distributeur automatique de nourriture selon la revendication 17, caractérisé en ce que la liaison à déclic présente, sur une partie, par exemple le couvercle (19), au moins une saillie (43), en particulier une nervure transversale, et, sur l'autre partie, par exemple l'arbre creux (40), au moins un logement correspondant (44), en particulier une rainure transversale, une fente correspondante ou analogue.

19. Distributeur automatique de nourriture selon l'une quelconque des revendications 1 à 18, caractérisé en ce que le couvercle (19) présente, dans la zone centrale, une douille (45) par laquelle le couvercle (19) peut être glissé sur une extrémité (46) de l'arbre creux (40).

20. Distributeur automatique de nourriture selon la revendication 19, caractérisé en ce qu'il est prévu, à l'extrémité de l'arbre creux (40), d'une part, et de la douille (45), d'autre part, respectivement une surface d'entraînement plate (47, 48) qui sert communément à l'entraînement en rotation lorsque le couvercle (19) a été glissé en place.

21. Distributeur automatique de nourriture selon l'une quelconque des revendications 1 à 20, caractérisé en ce que le tambour d'alimentation (12) est relié au couvercle (19) au moyen d'une liaison à déclic (31, 32).

22. Distributeur automatique de nourriture selon la revendication 21, caractérisé en ce que la liaison à déclic présente, sur une partie, par exemple sur les zones de bord du couvercle (19), au moins respectivement une saillie (31), en particulier respectivement une nervure transversale, et, sur l'autre partie, par exemple sur les zones de bord du tambour d'alimentation (12), au moins respectivement un logement correspondant (32), en particulier une rainure transversale, une fente ou analogue.

23. Distributeur automatique de nourriture selon l'une quelconque des revendications 1 à 22, caractérisé en ce que le dispositif d'entraînement (22) présente un moteur d'entraînement électrique (27) enclenchable par intervalles suivi d'un engrenage (49), en particulier un engrenage à vis sans fin à deux étages, dont la prise se fait via un arbre (50) qui est relié à l'arbre creux (40) de manière à résister à la torsion, en particulier qui est reçu dans celui-ci.
